# FASCICULE DE BREVET EUROPEEN

(11) **EP 3 978 858 B1**
(45) Date de publication et mention de la délivrance du brevet: **11.01.2023**
(21) Numéro de dépôt: 21200453.5
(22) Date de dépôt: 01.10.2021
(51) Int. Cl.: F28F 13/00, F28D 21/00

(54) **DIODE THERMIQUE POUR LIAISON THERMIQUE ENTRE DEUX ÉLÉMENTS CYLINDRIQUES, SYSTÈME EMBARQUÉ COMPRENANT UNE TELLE DIODE**
THERMISCHE DIODE ZUR THERMISCHEN VERBINDUNG ZWISCHEN ZWEI ZYLINDRISCHEN ELEMENTEN UND BORDYSTEM MIT EINER SOLCHEN DIODE
THERMAL DIODE FOR THERMAL LINK BETWEEN TWO CYLINDRICAL ELEMENTS, ON-BOARD SYSTEM COMPRISING SUCH A DIODE.

(30) Priorité: 02.10.2020 FR 2010101
(43) Date de publication de la demande: 06.04.2022
(73) Titulaire: Commissariat à l'Energie Atomique et aux Energies Alternatives, 75015 Paris (FR)
(72) Inventeur: Mariotto, Mathieu, 38054 Grenoble (FR); Carpier, Sébastien, 92350 Le Plessis-Robinson Cedex (FR); Champel, Bénédicte, 38054 Grenoble (FR); Gruss, Jean-Antoine, 38170 Seyssinet (FR); Peiffer, Raymond, 92350 Le Plessis-Robinson Cedex (FR)
(74) Mandataire: Nony

(56) Documents cités:
- EP-A1- 0 008 503
- WO-A1-2017/030634
- GB-A- 2 506 354
- US-A1- 2013 126 148
- US-A1- 2017 038 102

## Description

### Domaine technique

La présente invention concerne une diode thermique.

Tels que définis dans la publication [1], les dispositifs thermiques tels que les diodes, les régulateurs et les interrupteurs peuvent être définis par leurs fonctions de transfert, qui relient le flux de chaleur à la polarisation thermique (différence de températures), par analogie avec les courbes courant-tension dans le domaine électrique.

Par « diode thermique », on entend le sens donné par la publication [1], à savoir un composant à deux bornes qui redresse le flux de chaleur avec un transfert asymétrique : à une température moyenne fixe, les amplitudes des taux de transfert de chaleur avant et arrière diffèrent. Ce n'est donc pas un régulateur thermique ou encore un interrupteur thermique définis également dans cette publication [1]. Autrement exprimé une diode thermique, est un dispositif qui permet de transmettre un flux de chaleur d'un point, ou d'une surface ou d'un volume, à un autre point, surface ou volume uniquement dans une direction quelle que soit la direction du gradient de température.

Une application avantageuse est la gestion thermique de systèmes embarqués dans lesquels une fonction de diode thermique est nécessaire. Une telle fonction se trouve notamment dans les applications du spatial et de l'aéronautique dans lesquelles on trouve des systèmes embarqués. Un système embarqué dans des applications spatiales et aéronautiques subit des phases de vie avec des conditions de température fortement variables, compatibles ou non compatibles avec le bon fonctionnement des équipements. Typiquement, les systèmes embarqués intègrent de plus en plus de l'électronique éprouvée pour des applications civiles ou industrielles, pour des raisons de coûts et de disponibilité, mais qui réduisent la gamme d'utilisation en température des composants de 110°C à au mieux 80-85°C.

Bien que décrite en référence à cette application avantageuse, l'invention s'applique à toute autre application dans laquelle doit être mis en œuvre une diode thermique réversible ou irréversible entre deux éléments cylindriques.

### Technique antérieure

Dans de nombreux systèmes embarqués au sein d'appareils, l'extérieur d'un appareil peut constituer une source froide permettant la gestion thermique des composants internes au système. Il est alors nécessaire de mettre en place un chemin thermique performant entre les composants à refroidir et l'extérieur de l'appareil.

Cependant, il peut arriver que le contact thermique avec cette source froide extérieure devienne non souhaité pour un certain nombre de raisons (augmentation de la température extérieure, arrêt des composants à refroidir...).

L'activation et la désactivation du lien thermique peut se faire en utilisant une diode thermique, qui permet d'établir dans un sens uniquement ou de supprimer une liaison thermique entre deux pièces distinctes.

Le tableau I de la publication [1] précité donne une illustration des différents mécanismes physiques de transfert de chaleur non linéaires et commutables, démontrés expérimentalement, en particulier pour des diodes thermiques. Les auteurs précisent que tous les mécanismes fonctionnent près de la température ambiante et à la pression atmosphérique. Pour réaliser concrètement une diode thermique, plusieurs dispositifs ont déjà été envisagés que l'on peut classer en catégories comme suit :
- ceux à éléments conductifs ou non qui sont déplacés géométriquement,
- ceux à caloducs (à piège capillaire, à conductance variable, à régulation par incondensables,...),
- ceux mettant en œuvre des matériaux à mémoire de forme,
- ceux à éléments bimétalliques, ou « bilames »,
- ceux mettant en œuvre des changements de phase de matériaux (MCP).

Les diodes thermiques comprenant des éléments conductifs ou non qui sont déplacés géométriquement ont pour avantages primordiaux par rapport aux autres catégories précitées, notamment pour les applications spatiales et aéronautiques, d'apporter un spectre de réponse thermique plus important et plus précis, et donc une efficacité de gestion thermique améliorée.

US9704773B2 décrit pour une application de système embarqué dans une virole, un rupteur thermique fonctionnant en diode thermique, à actionneur électrique, pneumatique, électromagnétique ou autre, qui réalise le déplacement d'un élément conducteur pour sélectivement mettre en contact un élément dissipateur de chaleur avec un élément récupérateur de chaleur ou supprimer le lien thermique entre eux. Même si le rupteur décrit, semble remplir sa fonction on/off thermique, son efficacité thermique n'est pas satisfaisante par rapport à la problématique globale du système embarqué.

Ainsi, en premier lieu, rien n'est prévu dans le système décrit pour gérer la thermique de la source chaude dans les occurrences où la virole et l'ambiant ne sont pas exploitables pour la dissipation de cette énergie. Par-là, la préservation des fonctions électroniques et la dissipation de la chaleur du système embarqué sont loin d'être garanties.

Dans le cas où la température de la paroi externe du véhicule devient très chaude, la situation est encore plus dégradée. En effet, tout d'abord, il existe toujours un contact thermique entre l'élément dissipateur et la source chaude du boitier électronique.

Également, aucun moyen n'est mis en œuvre pour traiter les apports thermiques via la virole, que ce soit par transfert thermique convectif, dans l'espace laissé libre par l'élément conducteur mobile ou par transfert radiatif sur toute la surface de la virole sur laquelle le rupteur thermique est implanté.

Il existe donc un besoin d'améliorer les diodes thermiques, notamment afin de pallier les inconvénients précités du brevet US9704773B2, et permettre ainsi une gestion thermique optimisée de systèmes en particulier des systèmes embarqués.

Le but de l'invention est de répondre au moins en partie à ce besoin.

### Exposé de l'invention

Pour ce faire, l'invention concerne, sous l'un de ses aspects, une diode thermique d'axe central (X) comprenant :
- une première couronne, destinée à être en contact périphérique avec un boitier formant une source de chaleur; la première couronne étant divisée en un nombre pair n de portions angulaires égales dont la moitié en matériau isolant thermique sur au moins une partie de leur épaisseur et le cas échéant, avec un Matériau à Changement de Phase (MCP) sur une partie de leur épaisseur, et l'autre moitié comprenant chacune un dissipateur de chaleur à ailettes qui s'étendent radialement par rapport à l'axe central X et un matériau à Changement de Phase (MCP) remplissant chacun des espaces entre deux ailettes adjacentes; chacune des portions à dissipateur de chaleur à ailettes remplie de matériau MCP étant agencée entre deux portions en matériau isolant thermique lorsque n est supérieur à 2;
- une deuxième couronne , destinée à être en contact périphérique avec une virole formant une source froide; la deuxième couronne étant concentrique autour de la première couronne; la deuxième couronne étant divisée en un même nombre pair n que celui de la première couronne de portions angulaires égales dont la moitié en matériau isolant thermique, et l'autre moitié en matériau conducteur thermique, agencées chacune entre deux portions en matériau isolant thermique lorsque n est supérieur à 2; l'une et/ou l'autre des première et deuxième couronnes étant montée(s) en rotation autour de l'axe central (X) ;

- au moins un moyen pour mettre en rotation autour de l'axe central (X) l'une et/ou l'autre des première et deuxième couronnes de sorte à superposer:
   - dans un régime passant, les portions en matériau isolant thermiquement de la deuxième couronne sur celles de la première couronne et simultanément les portions en matériau conducteur thermique de la deuxième couronne avec celles à dissipateur de chaleur à ailettes rempli de matériau MCP de la première couronne et ainsi, laisser passer le flux thermique issu du boitier vers la virole, ou
   - dans un régime bloqué, les portions en matériau isolant thermiquement de la deuxième couronne sur les portions à dissipateur de chaleur à ailettes rempli de matériau MCP de la première couronne et simultanément les portions en matériau conducteur thermique de la deuxième couronne sur les portions en matériau isolant thermique de la première couronne et ainsi, bloquer le flux thermique issu du boitier vers la virole, qui est absorbé par le matériau MCP remplissant les espaces entre ailettes, des portions à dissipateur de chaleur à ailettes.

Selon un premier mode de réalisation avantageux, le(s) moyen(s) de mise en rotation compren(nent) :
- au moins une denture à la périphérie d'une des extrémités longitudinales d'un dissipateur à ailettes ;
- au moins un moteur de rotation en engrènement avec la denture du dissipateur à ailettes. Ce mode d'actionnement de la diode est réversible car le moteur peut être un moteur réversible et donc mettre en rotation la couronne intérieure dans un sens ou dans l'autre. Selon un deuxième mode de réalisation avantageux, le(s) moyen(s) de mise en rotation compren(nent) :
- au moins un ressort de compression comprimé dans le régime passant de la diode ;
- au moins une pièce de maintien mécanique, en un matériau dont les propriétés mécaniques sont modifiées au-dessus d'une température seuil, de sorte à décompresser le ressort de compression et par là mettre en rotation la première couronne et/ou la deuxième couronne, de sorte à amener la diode dans le régime bloqué de la diode. Ce mode d'actionnement de la diode est irréversible.

Le ressort de compression peut être maintenu compressé par un aimant/électro-aimant ou une goupille.

Dans le cas d'un aimant, ou électroaimant, au moment du changement de scénario thermique, l'aimant est volontairement enlevé, désactivé ou changé de position, afin de décompresser maintenir le ressort.

Dans le cas d'une goupille, elle maintient en position le ressort compressé. Au moment du changement de scénario thermique, cette goupille est retirée (mécaniquement), ou n'est plus en mesure de retenir le ressort comprimé due à une augmentation de température qui correspond à une dégradation de sa tenue mécanique.

Selon une première variante avantageuse, le matériau de la pièce de maintien mécanique est un matériau fusible au-dessus de la température seuil. Le matériau peut être de la paraffine. Selon une deuxième variante avantageuse, le matériau de la pièce de maintien mécanique est un matériau dont le module d'Young et/ou la limite d'élasticité chute(nt) au-dessus de la température seuil. Il peut s'agir d'un matériau dont le module d'Young chute drastiquement en dessus de la température seuil recherchée, comme par exemple un élastomère, ou un thermoplastique. Il peut s'agir aussi d'un matériau de module d'Young élevé à basse température mais donc la limite d'élasticité chute en dessus de la température seuil recherchée, comme par exemple un poly(téréphtalate d'éthylène) (PET) amorphe.

Les portions isolantes de la première couronne peuvent être en matériau isolant thermique sur toute leur épaisseur. Par exemple, le matériau isolant thermique peut être choisi parmi un nylon, une laine de roche, un aérogel.

De manière alternative, les portions isolantes de la première couronne peuvent être constituées d'un matériau isolant thermique sur une partie extérieure de leur épaisseur et, d'un matériau MCP encapsulé dans une enveloppe en matériau conducteur thermique sur une partie intérieure de leur épaisseur.

Avantageusement, les dissipateurs à ailettes de la première couronne cylindrique et/ou les portions conductrices de la deuxième couronne cylindriques sont en un alliage métallique en matériau à conductivité thermique élevée.

Avantageusement encore, les dissipateurs à ailettes de la première couronne cylindrique et les portions conductrices de la deuxième couronne cylindriques est(sont) revêtue(s) d'un ou plusieurs matériau(x) d'interface thermique. De préférence, le(s) matériau(x) d'interface est(sont) en un alliage de métaux eutectiques dit basse température. De préférence encore, il s'agit d'un alliage à base de bismuth, d'indium et d'étain.

Le(s) matériau(x) d'interface peuvent être également sous la forme de feuillards, bandes ou tiges, appliquées, ou insérés dans des rainures dans les ailettes des dissipateurs à ailettes de la première couronne cylindrique et/ou dans les portions conductrices de la deuxième couronne cylindriques.

L'invention concerne également un système comprenant :
- un boitier formant une source de chaleur ;
- une virole formant une source froide ;
- une diode thermique entre le boitier et la virole telle que décrite précédemment.

La première couronne est de préférence solidaire du boitier, tandis que la deuxième couronne est de préférence solidaire de la virole.

Selon un mode de réalisation, le boitier peut loger au moins un composant électronique.

Avantageusement, selon ce mode, le boitier comprend intérieurement au moins deux glissières dans lesquelles est insérée une carte imprimée (PCB) supportant un ou plusieurs composants électroniques, les glissières étant agencées pour émettre le flux thermique dégagé par le ou les composants électroniques.

Avantageusement encore, le matériau MCP remplissant les espaces entre ailettes d'un dissipateur thermique a une température de fusion inférieure à la température maximale autorisée pour le(s) composant(s) électronique(s).

Le système peut constituer avantageusement un système embarqué.

L'invention concerne également l'utilisation du système embarqué dans le domaine spatial et/ou de l'aéronautique et/ou du transport.

Ainsi, l'invention consiste essentiellement en une diode thermique que l'on peut configurer réversible ou irréversible, qui consiste en deux couronnes concentriques l'une autour de l'autre, chacune en contact périphérique avec une source froide (virole) ou une source de chaleur (boitier d'équipement), et divisée en portions angulaires aux caractéristiques thermiques différenciées. Les couronnes sont mises en rotation relative l'une par rapport à l'autre pour superposer sélectivement les portions angulaires, afin de transférer ou de bloquer efficacement le flux thermique depuis la source de chaleur .

Les avantages d'une diode thermique selon l'invention sont nombreux parmi lesquels on peut citer :
- une préservation garantie des fonctions électroniques et dissipation de la chaleur du système embarqué même si l'ambiant et la virole ne sont pas utilisables en tant que sources plus froides ;
- un traitement efficace des apports thermiques soit par transfert thermique convectif, soit par transfert radiatif depuis la virole, si l'ambiant et la virole ne sont pas utilisables en tant que sources plus froides.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1A] la figure 1A est une vue schématique en coupe transversale d'un système embarqué intégrant une diode thermique selon l'invention, la figure 1A montrant la diode dans son mode de fonctionnement en régime passant (régime stationnaire du système), i.e. dans lequel elle transfère un flux thermique.
[Fig 1B] la figure 1B reprend la figure 1A mais en montrant la diode dans son mode de fonctionnement en régime bloqué (régime transitoire), i.e. dans lequel elle ne transfère pas de flux thermique.
[Fig 2] la figure 2 est une vue en perspective montrant une portion angulaire à dissipateur de chaleur à ailettes rempli de matériau MCP de la couronne cylindrique de la diode thermique selon l'invention, qui est en contact avec le boitier cylindrique formant la source chaude du système embarqué.
[Fig 3A] la figure 3A est une vue schématique en perspective montrant le boitier cylindrique formant la source chaude du système embarqué.
[Fig 3B] la figure 3B reprend la figure 3A mais en montrant l'intégration des portions angulaires à dissipateur de chaleur à ailettes remplies de matériau MCP de la couronne cylindrique de la diode thermique selon l'invention qui est en contact avec le boitier cylindrique formant la source chaude du système embarqué.
[Fig 3C] la figure 3C reprend la figure 3B mais en montrant l'intégration des portions angulaires isolantes thermiquement de la couronne cylindrique de la diode thermique selon l'invention qui est en contact avec le boitier cylindrique formant la source chaude du système embarqué
[Fig 3D] la figure 3D reprend la figure 3C mais en montrant l'intégration des portions angulaires isolantes thermiquement de la couronne cylindrique de la diode thermique selon l'invention qui est en contact avec la virole formant la source froide du système embarqué.
[Fig 3E] la figure 3E reprend la figure 3D mais en montrant l'intégration des portions angulaires conductrices thermiquement de la couronne cylindrique de la diode thermique selon l'invention qui est en contact avec la virole formant la source froide du système embarqué.
[Fig 3F] la figure 3F reprend la figure 3E mais en montrant l'intégration de la virole formant la source froide du système embarqué, qui finalise ce dernier.
[Fig 4A] la figure 4A est une vue schématique du système embarqué illustrant les températures et le flux thermique pendant son fonctionnement en régime stationnaire (régime passant de la diode).
[Fig 4B] la figure 4B est une vue schématique du système embarqué illustrant les températures et le flux thermique pendant son fonctionnement en régime transitoire (régime bloqué de la diode).
[Fig 5] la figure 5 est une vue en perspective montrant une variante de portion angulaire à dissipateur de chaleur à ailettes selon laquelle une denture pour la mise en rotation de la couronne cylindrique qui est en contact avec le boitier cylindrique.
[Fig 6] la figure 6 est une reproduction de simulation de profil thermique du système embarqué en régime stationnaire (régime passant de la diode).
[Fig 7] la figure 7 est une reproduction des conditions initiales du régime transitoire d'une simulation de profil thermique du système embarqué en régime transitoire (régime bloqué de la diode).
[Fig 7A] la figure 7A est une reproduction des résultats de la simulation de profil thermique du système embarqué en régime transitoire (régime bloqué de la diode) selon la figure 7.
[Fig 7B] la figure 7B est une autre reproduction des résultats de la simulation de profil thermique du système embarqué en régime transitoire (régime bloqué de la diode) selon la figure 7.
[Fig 8] la figure 8 est une vue schématique en perspective du système embarqué montrant une variante de réalisation des portions isolantes de la couronne de la diode thermique en contact avec le boitier du système.
[Fig 8A] la figure 8A est une vue de détail de la figure 8.
[Fig 9] la figure 9 illustre sous forme de courbes, l'impact de la variante des figures 8 et 8A sur la thermique du système embarqué.
[Fig 10A] la figure 10A est une vue schématique en perspective du système embarqué montrant une variante de réalisation d'un moyen de mise en rotation d'une des couronnes de la diode thermique au moyen d'un ressort hélicoïdal de compression, la figure 10A montrant le ressort dans son état compressé.
[Fig 10B] la figure 10B reprend la figure 10A mais avec le ressort dans son état décompressé.
[Fig 11A] la figure 11A est une vue schématique en perspective du système embarqué montrant une variante de réalisation d'un moyen de mise en rotation d'une des couronnes de la diode thermique au moyen d'un ressort de torsion, la figure 11A montrant le ressort dans son état compressé.
[Fig 11B] la figure 11B reprend la figure 11A mais avec le ressort dans son état décompressé.

### Description détaillée

Dans l'ensemble de la demande, les termes « régime stationnaire » et « régime passant » désignent le même régime, correspondant respectivement au fonctionnement d'un système embarqué et à celui d'une diode thermique selon l'invention qui y est intégrée.

De même, les termes « régime transitoire » et « régime bloqué » désignent le même régime, correspondant respectivement au fonctionnement d'un système embarqué et à celui d'une diode thermique selon l'invention qui y est intégrée.

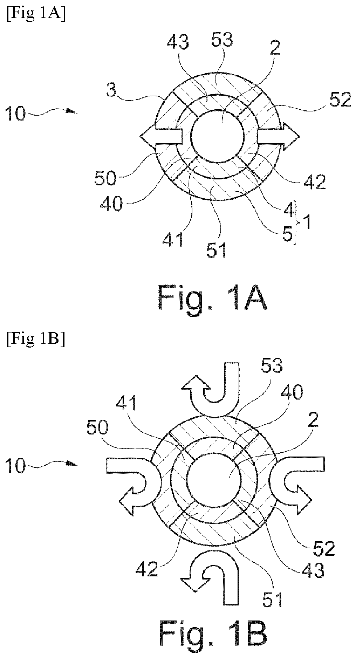

Un système embarqué 10 intégrant une diode thermique 1 selon l'invention est montré schématiquement en figures 1A et 1B.

Le système embarqué 10 est symétrique de révolution autour d'un axe central X.

Le système embarqué comprend en tant que source de chaleur, un boitier cylindrique 2 d'équipement électronique logeant une ou plusieurs cartes imprimées qui supportent chacune un ou plusieurs composants électroniques qui dégagent en fonctionnement une puissance thermique et en tant que source froide, une virole 3, la diode thermique 1 étant agencée entre le boitier cylindrique 2 et la virole 3.

Le système embarqué 10 qui va être décrit est embarqué dans un véhicule et les régimes de fonctionnement auxquels il est soumis, correspondant aux régimes de fonctionnement que la diode thermique 1 doit mettre en œuvre, sont les suivants :
- en régime stationnaire, le boitier cylindrique 2 et ses cartes électroniques dissipant une puissance thermique d'une à plusieurs dizaines de Watt par exemple, doivent être maintenus à une température acceptable typiquement inférieure à 80-85°C. La diode thermique 1 doit assurer le chemin du flux thermique, et c'est la paroi externe de la virole 3, en contact convectif avec l'air extérieur moins chaud qui permet d'évacuer la puissance thermique dissipée par les cartes ;
- en régime transitoire, les conditions aérothermiques très contraignantes, conduisent à des températures de paroi externe de virole 3 de plusieurs centaines de degrés Celsius. Dans ces conditions, le boitier 2 et ses cartes électroniques doivent être isolés thermiquement, et l'inertie thermique du système 10 obtenue par la diode thermique 1 doit être suffisante pour que la température acceptable ne soit pas dépassée.

La diode thermique 1 selon l'invention comprend une première couronne cylindrique 4 fixée avec contact périphérique sur la paroi extérieure du boitier 2 et une deuxième couronne cylindrique 5, concentrique à la première couronne cylindrique 4, fixée avec contact périphérique sur la paroi intérieure de la virole 3.

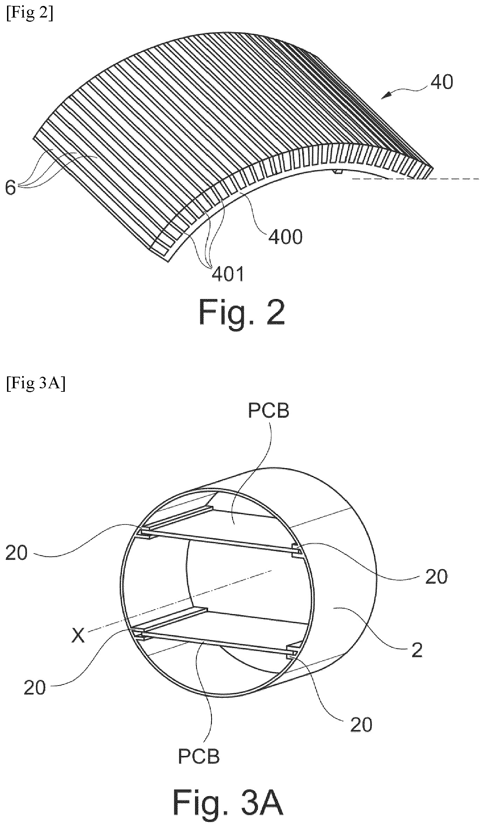

La première couronne cylindrique 4 est divisée en quatre portions angulaires égales 40 à 43. Deux des portions 40, 42, diamétralement opposées, comprennent chacune un dissipateur de chaleur à ailettes. Les ailettes 401, 421 s'étendent depuis la base 400, 420 du dissipateur, radialement par rapport à l'axe central X. Un matériau MCP 6 remplit chacun des espaces entre deux ailettes adjacentes 401, 421. Un exemple est illustré en figure 2 en référence avec la portion 40.

Le matériau MCP 6 peut être encapsulé dans des enveloppes semi rigides qui s'imbriquent entre les ailettes. Pour assurer un contact thermique efficace, le remplissage en MCP de ces enveloppes peut se faire une fois en place, entre les ailettes, et en légère surpression. L'enveloppe peut être réalisé dans un film métallique s'il est compatible chimiquement avec le MCP.

On peut aussi envisager d'avoir une couronne avec des trous de section rectangulaire remplis de MCP qui sont rendus étanches par des anneaux rapportés à chaque extrémité de la couronne.

Un dissipateur thermique 400, 420 peut être réalisé en aluminium par extrusion, moulage ou usiné avec une série d'aluminium dont la conductivité thermique est élevée, typiquement supérieure ou égale à 150W/m/K.

La couronne 4 comprend également deux portions 41, 43 en matériau isolant thermique.

Chacune des deux portions 40, 42 à dissipateur de chaleur est agencée entre les deux portions isolantes 41, 43.

La première couronne cylindrique 4 est montée en rotation autour de l'axe central (X).

La deuxième couronne cylindrique 5 est également divisée en quatre portions angulaires égales 50 à 53. Deux des portions 50, 52, diamétralement opposées sont en matériau conducteur thermique. Les deux autres portions 51, 52 sont en matériau isolant thermique, Chacune des deux portions conductrices 50, 52 est agencée entre les deux portions isolantes 51, 53.

Selon l'invention, la diode thermique 1 comprend un moyen pour mettre en rotation la couronne cylindrique intérieure 4, autour de l'axe central (X).

Comme schématisé en figure 1A, en régime stationnaire du système thermique 10, c'est-à-dire dans le régime passant de la diode 1, les portions isolantes 51, 53 de la deuxième couronne 5 sont superposées sur les portions isolantes 41, 43 de la première couronne 4. Simultanément, les portions conductrices 50, 52, de la deuxième couronne 5 sont superposées sur les portions 40, 42 à dissipateur de chaleur 400, 420 de la première couronne 4. Ainsi, un chemin thermique conductif est réalisé entre le boitier 2 et la virole 3, ce chemin permettant de gérer l'échauffement thermique local dans le boitier 2, dû à la puissance thermique dégagée par les cartes électroniques. Ce flux thermique est drainé vers la paroi de la virole 3 où l'air extérieur de température constante par paliers, qui constitue la source froide du système, va permettre de limiter l'échauffement du boitier 2.

Comme schématisé en figure 1B, en régime transitoire du système thermique 10, c'est-à-dire dans le régime bloqué de la diode 1, la couronne cylindrique 4 a été mise en rotation d'un quart de tour. Dans ce régime, les portions isolantes 51, 53 de la deuxième couronne 5 sont superposées sur les portions 40, 42 à dissipateur de chaleur de la première couronne 4. Simultanément, les portions conductrices 50, 52 de la deuxième couronne 5 sont superposées sur les portions isolantes 41, 43 de la première couronne 4.

Dans ce régime transitoire, le chemin thermique est bloqué et de l'inertie thermique apportée par le matériau 6 (MCP) permet de compenser l'échauffement thermique des cartes électroniques. Autrement dit, le matériau MCP sert de tampon thermique inertiel car la virole 3 ne peut plus évacuer par convection le flux thermique dégagé par les cartes électroniques. Et le flux thermique, venant de l'extérieur du système 10 via la virole 3 est stoppé par les portions isolantes 41, 43 de la première couronne 4 et les portions isolantes de la première et deuxième couronne les portions isolantes 51, 53 de la deuxième couronne 5.

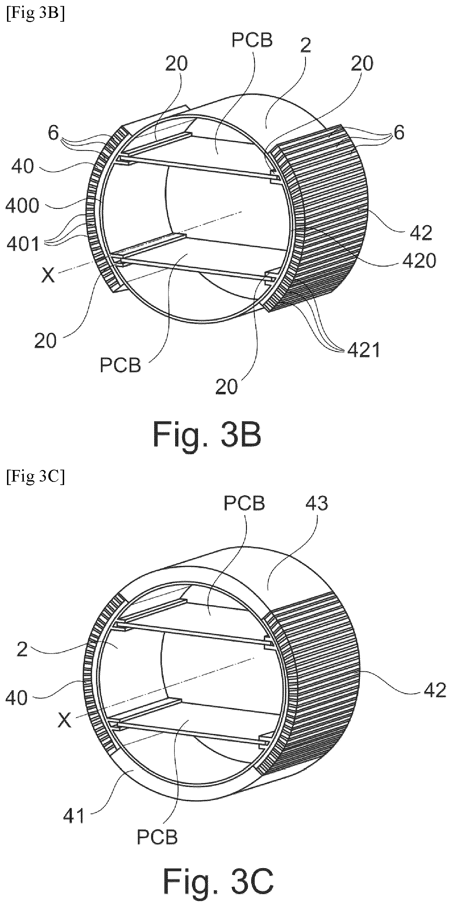

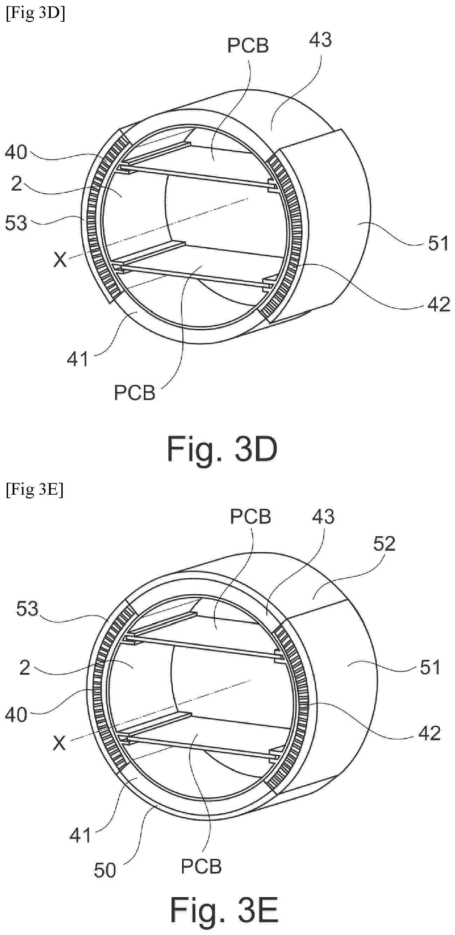

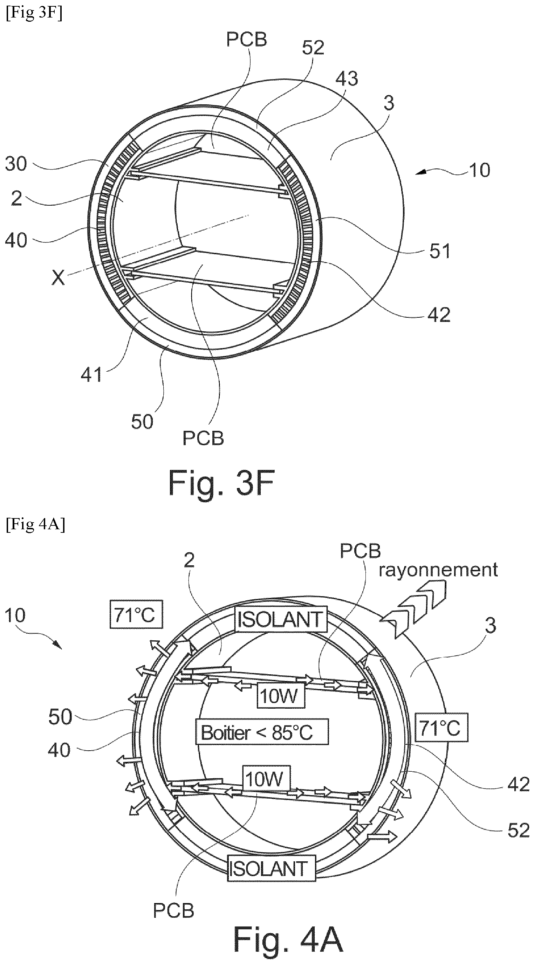

Les figures 3A à 3F décrivent les différentes étapes de réalisation et d'intégration successives des différents composants d'un exemple de diode thermique 1 dans un système embarqué 10.

Dans le système illustré sur ces figures 3A à 3F, le boitier cylindrique 2 intègre deux cartes imprimées (PCB) qui supportent chacune plusieurs composants électroniques. Chacune des deux cartes PCB est montée par insertion dans des glissières 20. Les deux cartes PCB sont maintenues parallèles et comme visible en figure 3B, les portions angulaires 40, 42 à dissipateurs 400, 420 et matériaux MCP recouvrent la périphérie du volume intérieur occupé par les cartes PCB.

Le tableau 1 ci-dessous synthétise un exemple de différents matériaux envisageables pour les différents composants d'une diode thermique 1 et du système embarqué 10 avec leurs propriétés physiques.

### [Tableau 1]

**TABLEAU 1**

| **Composant** | **Matériau** | **Caractéristiques** | **Masse volumique en kg/m³** | **Conductivité thermique en W/m/K** | **Chaleur spécifique en J/Kg/K** |
|---|---|---|---|---|---|
| Boitier cylindrique 2 | métal | | | ≥ 200 | |
| Virole 3 | acier ou titane | | | | |
| Dissipateur thermique à ailettes 400.420 | aluminium série extrusion | | 2800 | 160 | 960 |
| Matériau à changement de phase 6 | Dénomination commerciale RUBITHERM RT80HC | Enthalpie de Changement de phase 220kJ/kg | solide (25°C) 900 | 0.14 | 2000 |
| | | Entre 70°C et 85°C Tₘₐₓ=110°C | Liquide (90°C) 800 | | |
| Portions isolantes 41; 43 ; 51, 53 | Aérogel haute température 650°C Dénomination commerciale PYROGEL d'ASPEN | | 100 | 0.020 à 0°C | 1046 |
| | | | | 0.023 à 100°C | |
| | | | | 0.063 à 600°C | |
| Portions conductrices 50, 52 | Aluminium | | 2700 | 200 | 900 |

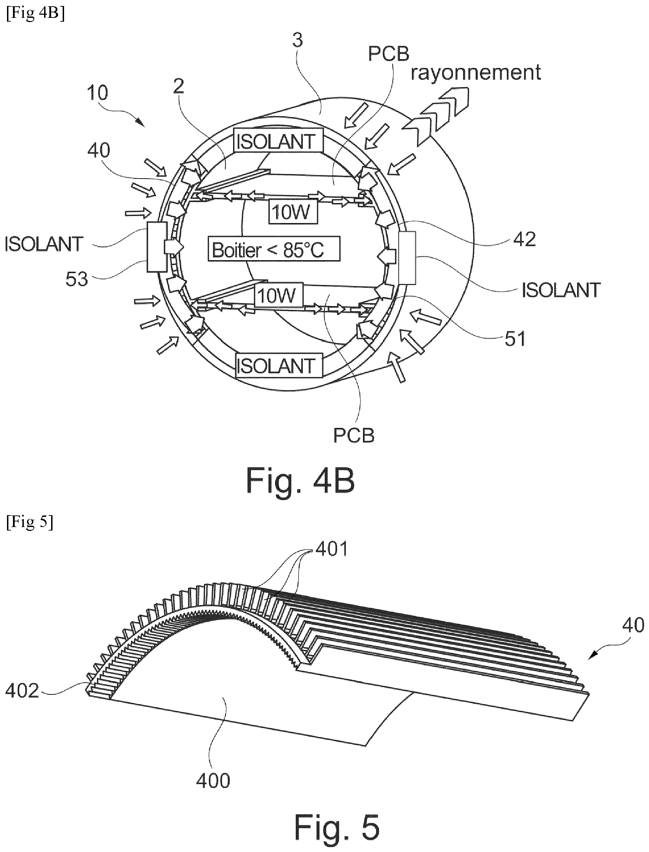

Les figures 4A et 4B illustrent le résultat de simulations numériques du fonctionnement de l'exemple précité de système 10 intégrant une diode thermique 1.

En régime stationnaire, la paroi externe de la virole 3 est en équilibre thermique convectif (quelques centaines de W/m²K) avec l'air extérieur en mouvement à une température inférieure à 80°C (figure 4A).

Le flux thermique relatif au fonctionnement des composants électroniques supportés par les cartes PCB fixées dans les glissières 20 constitue la source chaude.

Dans ce régime passant de la diode 1, les portions isolantes 51, 53 de la deuxième couronne, qui sont superposées sur la première représentent une résistance thermique locale trop importante vis-à-vis des autres portions et imposent donc au flux thermique de passer quasi exclusivement dans les portions 40, 42 à dissipateur de chaleur et le matériau MCP, puis dans les portions conductrices 50, 52 de la deuxième couronne 5

Le matériau à changement de phase 6 est à une température inférieure au début de sa plage de température de fusion et reste à l'état solide. De fait, il peut potentiellement absorber une charge thermique et changer d'état (chaleur latente de fusion).

Le système embarqué 10 est fonctionnel si dans ce régime stationnaire :
- la température des glissières est inférieure à 85°C,
- le matériau MCP est à l'état solide, ne doit pas dépasser une température de 81°C (85°C moins de 3°C de fenêtre de changement d'état et moins 1°C de marge de sécurité).

En régime transitoire, les conditions aux limites varient beaucoup temporellement. La source froide (paroi externe de la virole 3) devient une source chaude, typiquement jusqu'à plusieurs centaines de °C. Le matériau MCP entre les ailettes devient alors la source froide et doit absorber la puissance thermique dégagée par les cartes électronique PCB, afin de limiter leur échauffement à 85°C.

La rotation d'un quart de tour de la couronne 4 permet au système de changer de régime et donc d'atteindre ce régime transitoire.

Le système embarqué 10 est fonctionnel si, en fin de régime transitoire :
- la température des glissières est inférieure à 85°C,
- le matériau MCP est au pire à l'état liquide à une température inférieure à 84°C.

La figure 5 illustre une partie d'un moyen de mise en rotation de la couronne intérieure 4 pour réaliser le changement de régime de la diode thermique 1.

Comme visible sur cette figure 5, l'extrémité axiale d'une portion 40 à dissipateur à ailettes 40 présente une surépaisseur dans laquelle est réalisée une denture 402, droite dans l'exemple illustré. Cette denture 402 constitue une partie d'un engrenage à un ou plusieurs pignons entrainés par un ou des moteurs en rotation.

Une des clés de la faisabilité de cette invention réside dans la configuration des meilleurs contacts possibles entre les trois couronnes, spécialement au niveau des contacts des matériaux conductifs dans la configuration stationnaire.

Afin d'améliorer l'interface thermique entre les deux couronnes 4, 5, on peut agencer un matériau d'interface en alliage de métaux eutectiques dit basse température. En effet, des alliages à base de bismuth, indium et étain, dans des proportions données, ont des points de fusion entre 60°C et 85°C. Des exemples sont donnés dans le tableau 1 de la publication [2]. A titre d'exemple convenant particulièrement, on peut citer l'alliage 54.02Bi 29.68In 16.3Sn, dont la transition est à 81°C.

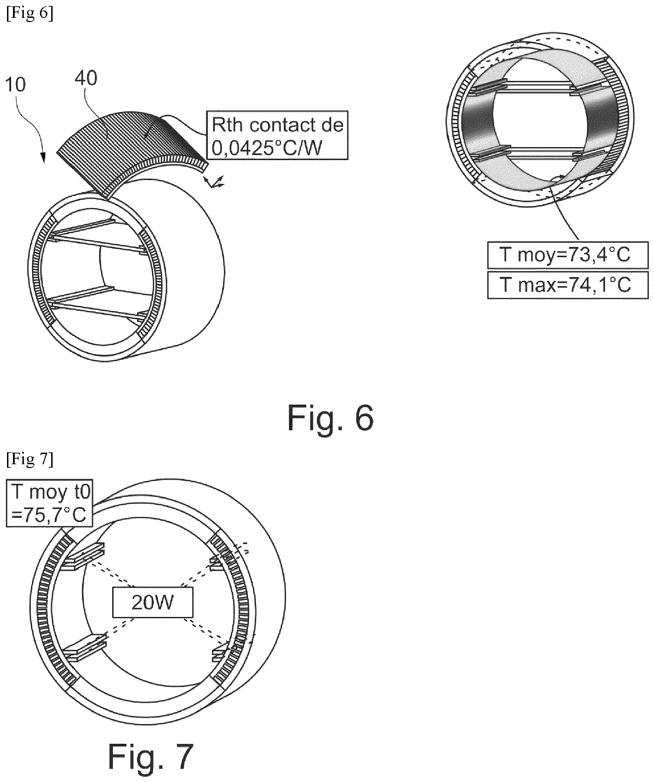

La figure 6 montre le résultat de simulations thermiques de l'exemple de système embarqué 10 pour des conditions de fonctionnement et aux limites nominales en régime stationnaire. Une résistance de contact au niveau des interfaces des portions conductrices 50, 52 est fixée arbitrairement comme celle d'un contact métal/métal (1×10⁻⁴ à 5×10⁻⁴ m².K/W).

La puissance thermique dissipée par les cartes électroniques PCB est de plusieurs dizaines de Watt.

Ces résultats montrent la validité du système embarqué avec la diode thermique 1, la température au niveau des glissières 20 du boitier 2 dans lesquelles sont insérées les cartes électroniques PCB restant largement inférieure au seuil de 85°C.

En conséquence, le système embarqué selon l'exemple serait valide pour une puissance des cartes électroniques doublée par rapport à celle qui a été prise comme référence dans ce calcul. Alternativement, en conservant la puissance de référence, la période de régime transitoire pourrait être doublée sans que le MCP commence à fondre.

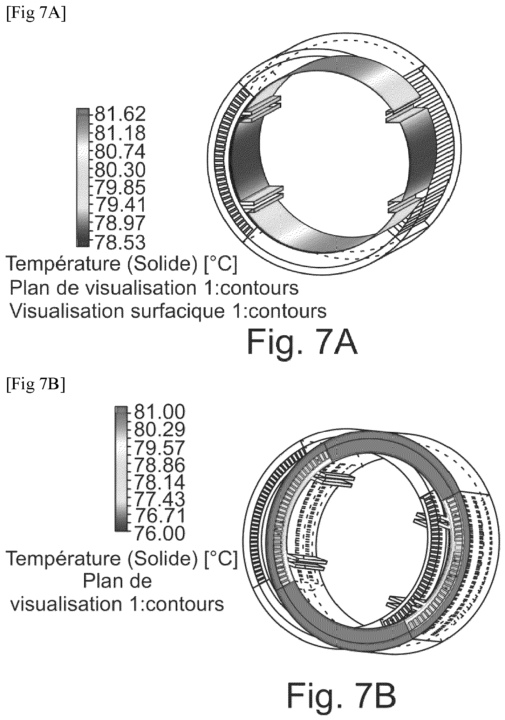

Les figures 7 et 7A montrent le résultat de simulations thermiques du même exemple en régime transitoire.

Le régime est transitoire pendant quelques minutes avec des températures pouvant atteindre provisoirement jusqu'à 700°C au niveau de la virole 3.

Aucun contact thermique n'est considéré dans la simulation numérique au niveau des interfaces des portions conductrices 50 et 52 de manière à rester conservatif.

La température initiale est d'environ 75°C.

Les résultats sont les suivants :
- température moyenne des glissières 20 : 79.6°C
- température moyenne du boitier 2 : 80°C
- température maximum du boitier 2 : 81.6°C

Ainsi, une différence seulement de 5.9°C apparaît par rapport à t=0s.

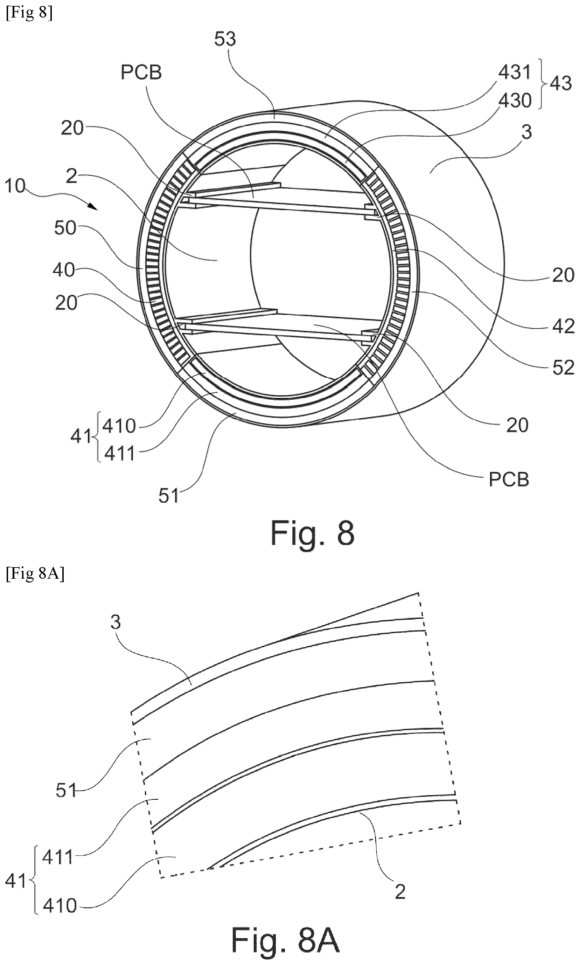

La figure 7B est une vue du champ de température dans un plan de coupe, en fin de régime transitoire, avec une échelle des températures comprise entre 75 °C et 81°C. Le rôle du matériau MCP ressort de cette figure 8 qui illustre que le potentiel de stockage thermique n'est pas épuisé, car la température locale du matériau MCP est inférieure à 81°C.

Les figures 8 et 8A montrent une variante avantageuse de réalisation des portions 41, 43.

Ces portions 41, 43 peuvent être réalisées avec un matériau MCP encapsulé 410, 430 sur la moitié de leur épaisseur qui est revêtu d'un matériau isolant thermiquement 411, 431 sur l'autre moitié de leur épaisseur.

Pour l'encapsulation du matériau MCP, on peut prévoir une enveloppe en aluminium, directement en contact avec le boitier cylindrique 2. A titre d'exemple, l'épaisseur de cette enveloppe en aluminium peut être de 5mm. Le matériau MCP peut être le même que celui remplissant les espaces entre ailettes 401, 421 des dissipateurs thermiques.

Cette variante est intéressante pour avoir un stockage thermique supplémentaire. En régime transitoire, la fonction d'isolation thermique des portions 41, 43 n'est pas inhibée par la présence supplémentaire de ces matériaux MCP. De plus, une partie de la puissance thermique dégagée par le boitier 2 se dirige naturellement vers le matériau MCP ajouté puis est bloqué par l'isolant thermique 411, 431.

En régime stationnaire, la simulation numérique met en évidence une augmentation de 1 à 2°C pour la variante avec ajout de MCP dans les portions 41, 43. L'ajout de MCP impacte également la puissance thermique maximum admissible : plus de deux fois moins de puissance qu'avec la configuration de portions 41, 43 intégralement en matériau isolant thermiquement.

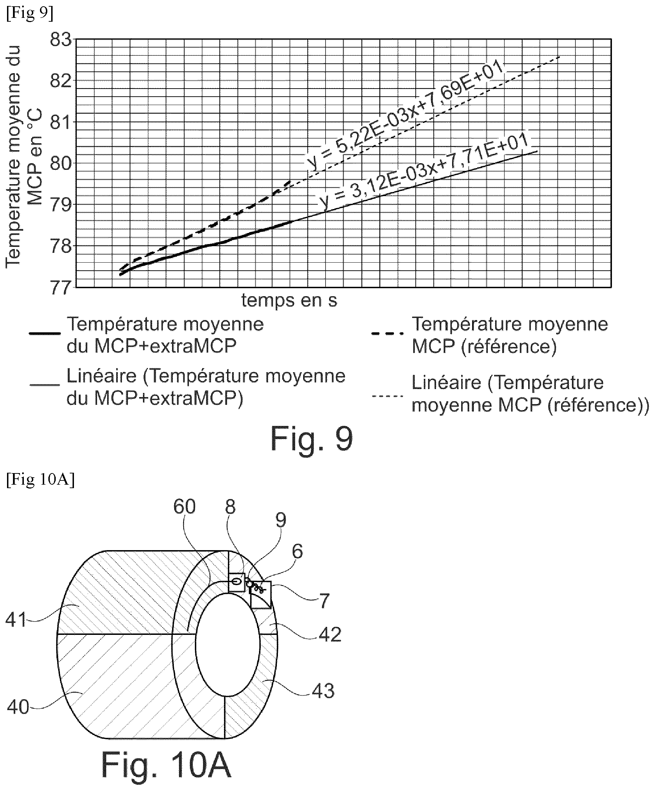

La figure 9 illustre les durées estimées avant que la température moyenne du MCP atteigne la température de fin de fusion, fixée à 80°C.

Sur cette figure 9, la courbe en pointillés montre l'évolution de la température en fonction du temps avec des portions 41, 43 en matériau isolant thermique sur toute leur épaisseur, tandis que la courbe en trait continu montre l'évolution de la température avec des portions 41, 43 comprenant un matériau MCP 410, 430 sur la moitié de leur épaisseur en contact avec le boitier 2.

Les graphes de cette figure 9 montrent que l'ajout de MCP (près de 60%) permet d'augmenter de façon significative la durée totale possible en régime transitoire, pour un système embarqué 9.

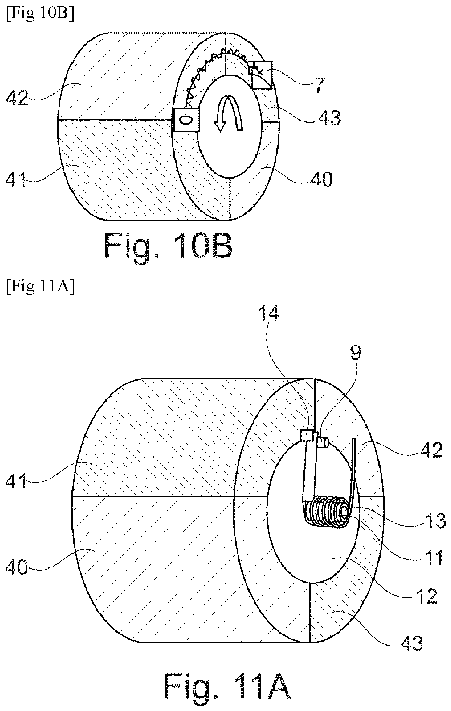

Les figures 10A et 10B montrent une variante de réalisation de moyen de mise en rotation la couronne cylindrique 4 au moyen d'un ressort hélicoïdal de compression 6.

Une première platine support 7 est fixée sur le boitier électronique 2. Une extrémité du ressort 6 et un guide 60 du ressort sont fixées à cette platine support 7.

Une deuxième platine 8 perforée est fixée sur la première couronne 4 dans laquelle s'insère le guide du ressort 6. L'autre extrémité du ressort est fixée à cette platine perforée 8. Cette deuxième platine 8 peut être lestée pour accentuer le mouvement de rotation.

Une pièce de maintien 9 est agencée pour maintenir compressé le ressort 6 dans le régime passant de la diode (figure 10A). Cette pièce de maintien 9 peut être une goupille, un électroaimant, un fusible thermique...Au-dessus d'une température seuil, la pièce de maintien 9 a au moins une de ses propriétés mécaniques qui est modifiée de sorte à décompresser le ressort 6 et par là mettre en rotation la première couronne cylindrique 4 (figure 10B).

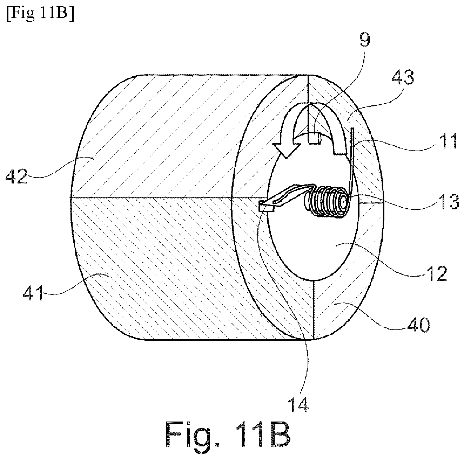

Les figures 11A et 11B montrent une variante de réalisation de moyen de mise en rotation la couronne cylindrique 4 au moyen d'un ressort de torsion 11.

Une platine support 12 est fixée sur le boitier électronique 2. Cette platine 12 supporte un axe 13 sur lequel le ressort 11 est maintenu.

Une tige de maintien 14 est solidaire d'une portion 41 de la première couronne. Une extrémité du ressort 11 vient en appui contre cette tige 14.

Une pièce de maintien 9 est agencée pour maintenir compressé le ressort 11 dans le régime passant de la diode (figure 11A). Cette pièce de maintien 9 peut être une goupille, un électroaimant, un fusible thermique...Au-dessus d'une température seuil, la pièce de maintien 9 a au moins une de ses propriétés mécaniques qui est modifiée de sorte à décompresser le ressort de torsion 11 et par là mettre en rotation la première couronne 4.

L'invention n'est pas limitée aux exemples qui viennent d'être décrits; on peut notamment combiner entre elles des caractéristiques des exemples illustrés au sein de variantes non illustrées.

D'autres variantes et améliorations peuvent être envisagées sans pour autant sortir du cadre de l'invention.

Si l'exemple décrit concerne un système embarqué, une diode thermique selon l'invention peut être mise en œuvre dans n'importe quel système pour transférer ou bloquer un flux thermique entre deux éléments entre eux dont l'un constitue une source froide, typiquement l'environnement extérieur, et l'autre constitue une source de chaleur, typiquement un appareil.

Les exemples illustrés concernent un système embarqué avec une diode thermique configurée pour maintenir à une température acceptable, typiquement aux environs de 80 à 85°C, le boitier et ses deux cartes électroniques PCB qui émettent une à plusieurs dizaines de Watt. Il va de soi que toute autre application peut être envisagée avec une diode thermique selon l'invention, i.e. par exemple avec un plus grand nombre de cartes électroniques et pour des températures acceptables supérieures ou inférieures.

Dans les exemples illustrés, le nombre de portions des couronnes est fixé à quatre. Dans le cadre de l'invention un nombre n multiple de deux de portions convient. Et la rotation angulaire d'une couronne est égale à II/n

Dans les exemples illustrés, pour le changement de régime de fonctionnement de la diode thermique, la mise en rotation est celle de la couronne en contact avec la source de chaleur. On peut tout-à-fait envisager que ce soit la couronne en contact avec la virole qui soit mise en rotation.

Dans les exemples illustrés, la couronne intérieure est fixée au boitier cylindrique. Elle peut être uniquement en contact périphérique avec ce dernier.

De même, la couronne extérieure est fixée à la virole mais elle peut être uniquement en contact sans liaison mécanique avec cette dernière.

Dans les exemples illustrés, pour le changement de régime de fonctionnement de la diode thermique, la mise en rotation est effectuée par un actionneur à moteur en rotation en engrènement avec une denture d'une portion à dissipateur de chaleur de la couronne intérieure. La mise en rotation peut être effectuée aussi avec la denture d'une des portions de la couronne extérieure. La denture représentée est une partie d'un engrenage cylindrique droit à contact intérieur. On peut aussi envisager un engrenage conique à contact extérieur ou intérieur. Également, si le couple d'un moteur est insuffisant pour mettre en rotation une couronne, le nombre de moteurs peut être multiplié, un ou deux par portion à dissipateur à ailettes radiateur par exemple et ceci à chaque bord périphérique d'une portion.

En tant qu'alternative aux alliages de métaux eutectiques dit basse température pour le matériau d'interface thermique, on peut envisager utiliser d'autres matériaux fusibles métalliques, organiques connus de l'homme de l'art ayant une température de fusion autour de la température seuil à laquelle l'une ou l'autre des couronnes est mise en rotation pour le changement de régime de fonctionnement de la diode thermique.

Également, on peut introduire dans l'espace annulaire entre couronnes un liquide pour améliorer l'interface thermique entre elles, ce liquide étant maintenu par des forces capillaires, ou dans le cas d'un ferrofluide par des forces magnétiques fournies par des petits aimants logés dans l'une et/ou l'autre des couronnes.

### Liste des références citées

[1]: Geoff Wehmeyer, Tomohide Yabuki, Christian Monachon, Junqiao Wu, and Chris Dames, "Thermal diodes, regulators, and switches: Physical mechanisms and potential applications", Applied Physics Reviews 4, 041304 (2017).
[2]: Chris G. Macris, Thomas R. Sanderson, Robert G. Ebel, Christopher B. Leyerle, « Performance, Reliability, and Approaches Using a Low Melt Alloy as a Thermal Interface Material ». Enerdyne Solutions, 125 West North Bend Way, North Bend, WA 98045, (425) 888-1880.

## Revendications

1. Diode thermique (1) d'axe central (X) comprenant :
- une première couronne (4), destinée à être en contact périphérique avec un boitier (2) formant une source de chaleur; la première couronne étant divisée en un nombre pair n de portions angulaires égales dont la moitié en matériau isolant thermique sur au moins une partie de leur épaisseur et avec le cas échéant avec un matériau à changement de phase (MCP) sur une partie de leur épaisseur, et l'autre moitié comprenant chacune un dissipateur de chaleur à ailettes qui s'étendent radialement par rapport à l'axe central X et un matériau à changement de phase (MCP) remplissant chacun des espaces entre deux ailettes adjacentes ; chacune des portions à dissipateur de chaleur à ailettes remplies de matériau à changement de phase (MCP) étant agencée entre deux portions en matériau isolant thermique lorsque n est supérieur à 2;
- une deuxième couronne (5), destinée à être en contact périphérique avec une virole (3) formant une source froide; la deuxième couronne étant concentrique autour de la première couronne; la deuxième couronne étant divisée en un même nombre pair n que celui de la première couronne, de portions angulaires égales dont la moitié en matériau isolant thermique, et l'autre moitié en matériau conducteur thermique, agencées chacune entre deux portions en matériau isolant thermique lorsque n est supérieur à 2; l'une et/ou l'autre des première et deuxième couronnes étant montée(s) en rotation autour de l'axe central (X) ;
- au moins un moyen pour mettre en rotation autour de l'axe central (X) l'une et/ou l'autre des première et deuxième couronnes, de sorte à superposer:
• dans un régime passant, les portions en matériau isolant thermiquement de la deuxième couronne sur celles de la première couronne et simultanément les portions en matériau conducteur thermique de la deuxième couronne avec celles à dissipateur de chaleur à ailettes remplies de matériau MCP de la première couronne et ainsi, laisser passer le flux thermique issu du boitier (2) vers la virole (3), ou
• dans un régime bloqué, les portions en matériau isolant thermiquement de la deuxième couronne sur les portions à dissipateur de chaleur à ailettes rempli de matériau MCP de la première couronne et simultanément les portions en matériau conducteur thermique de la deuxième couronne sur les portions en matériau isolant thermique de la première couronne et ainsi, bloquer le flux thermique issu du boitier (2) vers la virole (3), qui est absorbé par le matériau MCP remplissant les espaces entre ailettes des portions à dissipateur de chaleur à ailettes.

2. Diode thermique (1) selon la revendication 1, le(s) moyen(s) de mise en rotation comprenant :
- au moins une denture à la périphérie d'une des extrémités longitudinales d'un dissipateur à ailettes ;
- au moins un moteur de rotation en engrènement avec la denture du dissipateur à ailettes.

3. Diode thermique (1) selon la revendication 1, le(s) moyen(s) de mise en rotation comprenant :
- au moins un ressort de compression comprimé dans le régime passant de la diode ;
- au moins une pièce de maintien mécanique, en un matériau dont les propriétés mécaniques sont modifiées au-dessus d'une température seuil, de sorte à décompresser le ressort de compression et par là mettre en rotation la première couronne et/ou la deuxième couronne de sorte à amener la diode dans le régime bloqué de la diode.

4. Diode thermique (1) selon la revendication 3, le matériau de la pièce de maintien mécanique étant un fusible en dessus de la température seuil.

5. Diode thermique (1) selon l'une des revendications 3 ou 4, le matériau de la pièce de maintien mécanique étant un matériau dont le module d'Young et/ou la limite d'élasticité chute(nt) au-dessus de la température seuil.

6. Diode thermique (1) selon l'une des revendications précédentes, les portions isolantes de la première couronne étant en matériau isolant thermique sur toute leur épaisseur.

7. Diode thermique (1) selon l'une des revendications 1 à 5, les portions isolantes de la première couronne étant constituées d'un matériau isolant thermique sur une partie extérieure de leur épaisseur et, d'un matériau MCP encapsulé dans une enveloppe en matériau conducteur thermique sur une partie intérieure de leur épaisseur.

8. Diode thermique (1) selon l'une des revendications précédentes, les dissipateurs à ailettes de la première couronne et/ou les portions conductrices de la deuxième couronne étant en un alliage métallique en matériau à conductivité thermique élevée.

9. Diode thermique (1) selon l'une des revendications précédentes, les dissipateurs à ailettes de la première couronne et les portions conductrices de la deuxième couronne étant revêtue(s) d'un ou plusieurs matériau(x) d'interface thermique.

10. Diode thermique (1) selon la revendication 9, le(s) matériau(x) d'interface étant en un alliage de métaux eutectiques dit basse température.

11. Diode thermique (1) selon la revendication 10, l'alliage de métaux eutectiques à basse température étant un alliage à base de bismuth, d'indium et d'étain.

12. Diode thermique (1) selon la revendication 10 ou 11, le(s) matériau(x) d'interface étant sous la forme de feuillards, bandes ou tiges, appliquées, ou insérés dans des rainures dans les ailettes des dissipateurs à ailettes de la première couronne et/ou dans les portions conductrices de la deuxième couronne.

13. Système (10) comprenant :
- un boitier (2) formant une source de chaleur ;
- une virole (3) formant une source froide ;
- une diode thermique (1) entre le boitier (2) et la virole (3) selon l'une des revendications précédentes.

14. Système (10) selon la revendication 13, la première couronne étant solidaire du boitier.

15. Système (10) selon la revendication 13 ou 14, la deuxième couronne étant solidaire de la virole.

16. Système (10) selon l'une des revendications 13 à 15, le boitier (2) logeant au moins un composant électronique.

17. Système (10) selon la revendication 16, le boitier (2) comprenant intérieurement au moins deux glissières dans lesquelles est insérée une carte imprimée (PCB) supportant un ou plusieurs composants électroniques, les glissières étant agencées pour émettre le flux thermique dégagé par le ou les composants électroniques.

18. Système (10) selon la revendication 17, le matériau MCP remplissant les espaces entre ailettes d'un dissipateur thermique ayant une température de fusion inférieure à la température maximale autorisée pour le(s) composant(s) électronique(s).

19. Système selon l'une des revendications 13 à 18, constituant un système embarqué.

20. Utilisation du système embarqué selon la revendication 19 dans le domaine spatial et/ou de l'aéronautique et/ou du transport.

## Patentansprüche

1. Thermische Diode (1) mit einer Mittelachse (X), umfassend:
- eine erste Krone (4), die dazu bestimmt ist, mit einem Gehäuse (2), das eine Wärmequelle bildet, in Umfangskontakt zu stehen; wobei die erste Krone in eine gerade Anzahl n von gleichen Winkelabschnitten unterteilt ist, von denen die Hälfte aus wärmeisolierendem Material über mindestens einen Teil ihrer Dicke und gegebenenfalls mit einem Phasenwechselmaterial (MCP) über einen Teil ihrer Dicke gebildet ist und die andere Hälfte jeweils einen Rippenkühlkörper, die sich radial zur Mittelachse X erstrecken, und ein Phasenwechselmaterial (MCP), das jeden der Räume zwischen zwei benachbarten Rippen füllt, umfasst; wobei jeder der mit Phasenwechselmaterial (MCP) gefüllten Rippenkühlkörperabschnitte zwischen zwei Abschnitten aus wärmeisolierendem Material angeordnet ist, wenn n größer als 2 ist;
- eine zweite Krone (5), die dazu bestimmt ist, mit einem Ring (3), der eine Kältequelle bildet, in Umfangskontakt zu stehen; wobei die zweite Krone konzentrisch um die erste Krone herum angeordnet ist; wobei die zweite Krone in eine gleiche gerade Anzahl n von gleichen Winkelabschnitten wie die erste Krone unterteilt ist, davon die Hälfte aus wärmeisolierendem Material und die andere Hälfte aus wärmeleitendem Material, die jeweils zwischen zwei Abschnitten aus wärmeisolierendem Material angeordnet sind, wenn n größer als 2 ist; wobei die eine und/oder die andere der ersten und der zweiten Krone um die Mittelachse (X) drehbar gelagert ist/sind;
- mindestens ein Mittel zum Drehen der einen und/oder der anderen der ersten und der zweiten Krone um die Mittelachse (X), um:
• in einem Durchgangszustand die Abschnitte aus wärmeisolierendem Material der zweiten Krone und die der ersten Krone und gleichzeitig die Abschnitte aus wärmeleitendem Material der zweiten Krone und die mit MCP-Material gefüllten Rippenkühlkörperabschnitte der ersten Krone übereinanderzubringen und so den Wärmefluss vom Gehäuse (2) zum Ring (3) durchzulassen oder
• in einem blockierten Zustand die Abschnitte aus wärmeisolierendem Material der zweite Krone und die mit MCP-Material gefüllten Rippenkühlkörperabschnitte der ersten Krone und gleichzeitig die Abschnitte aus wärmeleitendem Material der zweite Krone und die Abschnitte aus wärmeisolierendem Material der ersten Krone übereinanderzubringen und so den Wärmefluss vom Gehäuse (2) zum Ring (3) zu blockieren, der durch das MCP-Material, das die Rippenzwischenräume der Rippenkühlkörperabschnitte füllt, absorbiert wird.

2. Thermische Diode (1) nach Anspruch 1, wobei das (die) Mittel zum Drehen Folgendes umfasst (umfassen):
- mindestens eine Zahnung am Umfang eines der Längsenden eines Rippenkühlkörpers;
- mindestens einen Rotationsmotor, der mit der Zahnung des Rippenkühlkörpers kämmt.

3. Thermische Diode (1) nach Anspruch 1, wobei das (die) Mittel zum Drehen Folgendes umfasst (umfassen):
- mindestens eine Druckfeder, die im Durchgangszustand der Diode komprimiert wird;
- mindestens ein mechanisches Halteteil aus einem Material, dessen mechanische Eigenschaften oberhalb einer Schwellentemperatur verändert werden, um die Druckfeder zu dekomprimieren und dadurch die erste Krone und/oder die zweite Krone zu drehen, um die Diode in den blockierten Diodenzustand zu bringen.

4. Thermische Diode (1) nach Anspruch 3, wobei das Material des mechanischen Halteteils eine Schmelzsicherung oberhalb der Schwellentemperatur ist.

5. Thermische Diode (1) nach einem der Ansprüche 3 oder 4, wobei das Material des mechanischen Halteteils ein Material ist, dessen Elastizitätsmodul und/oder Elastizitätsgrenze oberhalb der Schwellentemperatur fällt (fallen).

6. Thermische Diode (1) nach einem der vorangehenden Ansprüche, wobei die isolierenden Abschnitte der ersten Krone über ihre gesamte Dicke aus wärmeisolierendem Material gebildet sind.

7. Thermische Diode (1) nach einem der Ansprüche 1 bis 5, wobei die isolierenden Abschnitte der ersten Krone über einen äußeren Teil ihrer Dicke aus einem wärmeisolierenden Material und über einen inneren Teil ihrer Dicke aus einem MCP-Material, das in einer Hülle aus wärmeleitendem Material eingekapselt ist, gebildet sind.

8. Thermische Diode (1) nach einem der vorangehenden Ansprüche, wobei die Rippenkühlkörper der ersten Krone und/oder die leitenden Abschnitte der zweiten Krone aus einer Metalllegierung aus einem Material mit hoher Wärmeleitfähigkeit gebildet sind.

9. Thermische Diode (1) nach einem der vorangehenden Ansprüche, wobei die Rippenkühlkörper der ersten Krone und die leitenden Abschnitte der zweiten Krone mit einem oder mehreren thermischen Schnittstellenmaterial(ien) beschichtet sind.

10. Thermische Diode (1) nach Anspruch 9, wobei das (die) Schnittstellenmaterial(ien) aus einer sogenannten niedrigschmelzenden Legierung von eutektischen Metallen gebildet ist (sind).

11. Thermische Diode (1) nach Anspruch 10, wobei die niedrigschmelzende Legierung von eutektischen Metallen eine Legierung auf der Basis von Wismut, Indium und Zinn ist.

12. Thermische Diode (1) nach Anspruch 10 oder 11, wobei das (die) Schnittstellenmaterial(ien) die Form von Bändern, Streifen oder Stäben aufweist (aufweisen), die in Nuten in den Rippen des Rippenkühlkörpers der ersten Krone und/oder in die leitenden Abschnitte der zweiten Krone eingebracht oder eingesetzt sind.

13. System (10), umfassend:
- ein Gehäuse (2), das eine Wärmequelle bildet;
- einen Ring (3), der eine Kältequelle bildet;
- eine thermische Diode (1) nach einem der vorangehenden Ansprüche zwischen dem Gehäuse (2) dem Ring (3).

14. System (10) nach Anspruch 13, wobei die erste Krone fest mit dem Gehäuse verbunden ist.

15. System (10) nach Anspruch 13 oder 14, wobei die zweite Krone fest mit dem Ring verbunden ist.

16. System (10) nach einem der Ansprüche 13 bis 15, wobei das Gehäuse (2) mindestens eine elektronische Komponente aufnimmt.

17. System (10) nach Anspruch 16, wobei das Gehäuse (2) innen mindestens zwei Schienen umfasst, in die eine Leiterplatte (PCB) eingesetzt ist, die eine oder mehrere elektronische Komponenten trägt, wobei die Schienen so angeordnet ist, dass sie den durch die elektronische(n) Komponente(n) freigesetzten Wärmefluss abgeben.

18. System (10) nach Anspruch 17, wobei das MCP-Material, das die Rippenzwischenräume eines Kühlkörpers füllt, eine Schmelztemperatur aufweist, die unter der maximal zulässigen Temperatur für die elektronische(n) Komponente(n) liegt.

19. System nach einem der Ansprüche 13 bis 18, das ein eingebettetes System bildet.

20. Verwendung eines eingebetteten Systems nach Anspruch 19 im Bereich der Raumfahrt und/oder der Luftfahrt und/oder des Transportwesens.

## Claims

1. Thermal diode (1) of central axis (X) comprising:
- a first crown ring (4), intended to be in peripheral contact with a housing (2) forming a heat source, the first crown ring being divided into an even number n of equal angular portions of which half is made of thermally insulating material over at least a part of their thickness and, if necessary, with a phase-change material (MCP) over a part of their thickness, and the other half each comprising a finned heat sink which extend radially with respect to the central axis X and a phase-change material (MCP) filling each of the spaces between two adjacent fins; each of the portions with finned heat sink filled with phase-change material (MCP) being arranged between two portions made of thermally insulating material when n is greater than 2;
- a second crown ring (5), intended to be in peripheral contact with a shell (3) forming a cold source, the second crown ring being concentric around the first crown ring; the second crown ring being divided into a same even number n as that of the first crown ring, of equal angular portions of which half is made of thermally insulating material, and the other half of thermally conductive material, each arranged between two portions made of thermally insulating material when n is greater than 2; one and/or the other of the first and second crown rings being mounted to rotate about the central axis (X);
- at least one means for rotating about the central axis (X) one and/or the other of the first and second crown rings, so as to superpose:
• in a conducting regime, the portions made of thermally insulting material of the second crown ring on those of the first crown ring and, simultaneously, the portions made of thermally conductive material of the second crown ring with those with finned heat sink filled with MCP material of the first crown ring and thus allow the heat flux from the housing (2) to pass to the shell (3), or
• in a blocked regime, the portions made of thermally insulating material of the second crown ring on the portions with finned heat sink filled with MCP material of the first crown ring and, simultaneously, the portions made of thermally conductive material of the second crown ring on the portions made of thermally insulating material of the first crown ring and thus block the heat flux from the housing (2) to the shell (3), which is absorbed by the MCP material filling the spaces between fins of the portions with finned heat sink.

2. Thermal diode (1) according to Claim 1, the rotating means comprising:
- at least one toothing at the periphery at one of the longitudinal ends of a finned heat sink;
- at least one rotation motor meshed with the toothing of the finned heat sink.

3. Thermal diode (1) according to Claim 1, the rotating means comprising:
- at least one compression spring compressed in the conducting regime of the diode;
- at least one mechanical holding piece, made of a material whose mechanical properties are modified above a threshold temperature, so as to decompress the compression spring and, thereby, rotate the first crown ring and/or the second crown ring so as to bring the diode into the blocked regime of the diode.

4. Thermal diode (1) according to Claim 3, the material of the mechanical holding piece being a fuse above the threshold temperature.

5. Thermal diode (1) according to either of Claims 3 and 4, the material of the mechanical holding piece being a material whose Young's modulus and/or yield strength drop above the threshold temperature.

6. Thermal diode (1) according to one of the preceding claims, the insulating portions of the first crown ring being made of thermally insulating material over their entire thickness.

7. Thermal diode (1) according to one of Claims 1 to 5, the insulating portions of the first crown ring being composed of a thermally insulating material over an outer part of their thickness and, of an MCP material encapsulated in a jacket made of thermally conductive material over an inner part of their thickness.

8. Thermal diode (1) according to one of the preceding claims, the finned heat sinks of the first crown ring and/or the conductive portions of the second crown ring being made of a metal alloy made of material with high thermal conductivity.

9. Thermal diode (1) according to one of the preceding claims, the finned heat sinks of the first crown ring and the conductive portions of the second crown ring being coated with one or more thermal interface materials.

10. Thermal diode (1) according to Claim 9, the interface material or materials being made an alloy of so-called low-temperature eutectic metals.

11. Thermal diode (1) according to Claim 10, the alloy of low-temperature eutectic metals being an alloy based on bismuth, on indium and on tin.

12. Thermal diode (1) according to Claim 10 or 11, the interface material or materials being in the form of strips, bands or rods, applied or inserted into grooves in the fins of the finned heat sinks of the first crown ring and/or into the conductive portions of the second crown ring.

13. System (10) comprising:
- a housing (2) forming a heat source;
- a shell (3) forming a cold source;
- a thermal diode (1) between the housing (2) and the shell (3) according to one of the preceding claims.

14. System (10) according to Claim 13, the first crown ring being secured to the housing.

15. System (10) according to Claim 13 or 14, the second crown ring being secured to the shell.

16. System (10) according to one of Claims 13 to 15, the housing (2) housing at least one electronic component.

17. System (10) according to Claim 16, the housing (2) internally comprising at least two guideways into which a printed circuit board (PCB) supporting one or more electronic components is inserted, the guideways being arranged to emit the heat flux given off by the electronic component or components.

18. System (10) according to Claim 17, the MCP material filling the spaces between fins of a heat sink having a melting point lower than the maximum temperature allowed for the electronic component or components.

19. System according to one of Claims 13 to 18, constituting an onboard system.

20. Use of the onboard system according to Claim 19 in the space and/or aeronautics and/or transport domain.
